# EUROPÄISCHE PATENTSCHRIFT

(11) **EP 1 740 287 B1**
(45) Veröffentlichungstag und Bekanntmachung des Hinweises auf die Patenterteilung: **13.08.2008**
(21) Anmeldenummer: 06722684.5
(22) Anmeldetag: 25.03.2006
(51) Int. Cl.: B01D 36/00, F02M 37/22

(54) **KRAFTSTOFFFILTER**
FUEL FILTER
FILTRE A CARBURANT

(30) Priorität: 02.04.2005 DE 102005015194
(43) Veröffentlichungstag der Anmeldung: 10.01.2007
(73) Patentinhaber: Mahle International GmbH, 70376 Stuttgart (DE)
(72) Erfinder: ABREU, Ricardo Simoes de, 13280-000 Vinhedo - Sao Paulo (BR); GERNAND, Dietmar, 13840-000 Mogi Guacu - Sao Paulo (BR)
(74) Vertreter: Bongen, Renaud & Partner
(86) Internationale Anmeldenummer: PCT/DE2006/000532
(87) Internationale Veröffentlichungsnummer: WO 2006/105755

(56) Entgegenhaltungen:
- EP-A- 0 260 069
- DE-A1- 3 440 506
- DE-A1- 10 123 190
- DE-A1- 10 308 427
- GB-A- 2 115 305
- US-A- 4 502 955

## Beschreibung

Die Erfindung betrifft ein Kraftstofffilter nach dem Oberbegriff des Patentanspruchs 1.

Bei einem solchen aus DE 101 23 190 A1 bekannten Filter handelt es sich um ein Ringfilterelement, bei dem der zur Wasserabscheidung vorgesehene Freiraum zwischen den beiden beabstandet voneinander liegenden durchlässigen Schichten mit einem im Betrieb des Filters unten liegenden Wassersammelraum verbunden ist.

Bei einer aus DE 34 40 506 A1 bekannten Einrichtung sind ein Coalescerelement und ein Separatorelement koaxial zueinander angeordnet, wobei das Coalescerelement außen und das Separatorelement innen liegen. Im Betrieb dieser Einrichtung werden diese beiden vorgenannten Elemente von außen nach innen durchströmt. Das in einem diese Einrichtung durchströmenden Kraftstoff möglicherweise vorhandene Wasser wird im Coalescerelement coalisiert und in einem zwischen dem Coalescerelement und dem Separatorelement liegenden Freiraum aufgrund der Schwerkraft in einen Wassersammelraum nach unten abgeführt. Es liegt lediglich eine einzige wasserabscheidende und durchlässige Schicht vor. Es ist bei dieser Einrichtung lediglich ein einziger Wassersammelraum für abgeschiedenes Wasser vorhanden.

Aus EP-A-0 260 069 ist eine Filtereinrichtung mit einer vom Kraftstoff zu durchströmenden Filterschicht bekannt, bei welcher eine Wasserabtrennung ausschließlich durch diese Filterschicht als solche bewirkt wird.

Bei einem aus DE 103 08 427 A1 bekannten Kraftstofffilter liegt zumindest eine radial zu durchströmende Filterschicht vor. Dabei ist sowohl auf der Roh- als auch auf der Reinseite dieser Filterschicht ein Wassersammelraum vorgesehen. Zusätzliche, wasserabscheidende Schichten stromauf oder stromab dieser Filterschicht sind nicht vorhanden. Der reinseitige Wassersammelraum liegt innerhalb der radial zu durchströmenden Filterschicht, unterhalb der lediglich der rohseitigre Wassersammelraum angeordnet ist.

Bei der aus US-A-4 502 955 bekannten Filtereinrichtung ist stromauf eines ringförmigen Filtermediums ein weiteres Filtermedium angeordnet, wobei aus einem Zwischenraum zwischen den beiden Filtermedien Wasser aufgrund seiner Schwerkraft nach unten in einen Wassersammelraum abfließen kann. Das ringförmige Filtermedium ist dabei als Coalescer ausgebildet, das heißt die Wasserabscheidung erfolgt durch Tröpfchenvergrößerung innerhalb des Coalescers, um stromab des Filtermediums eine schwerkraftbedingte Wasserabscheidung zu erreichen beziehungsweise zu begünstigen.

GB-A-2 115 305 betrifft ein Kraftstofffilter mit zwei in Strömungsrichtung nacheinander angeordneten Filtermedien und einer oberhalb beziehungsweise stromab hierzu angeordneten Kartusche mit einem weiteren Filtermedium. Dazwischen ist ein Freiraum vorgesehen, von welchem aus Wassertropfen in einen Wassersammelraum abfließen können. Stromauf der beiden Filtermedien kann Wasser in einen weiteren Wassersammelraum abfließen. Das aus dem Freiraum in den zugehörigen Wassersammelraum gelangende Wasser resultiert aus einer Coalescer-Trennwirkung innerhalb der Coalescerschicht, das heißt das Wasser wird innerhalb und nicht bereits vor der Filterschicht abgetrennt.

Die Erfindung beschäftigt sich bei einem gattungsgemäßen Kraftstofffilter mit dem Problem, mit einer konstruktiv und materialmäßig möglichst einfach aufgebauten Einrichtung eine möglichst vollständige Wasserabscheidung zu erreichen.

Gelöst wird dieses Problem durch die Ausführung eines gattungsgemäßen Kraftstofffilters nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, Wasser innerhalb des Kraftstofffilters jeweils stromauf der beiden Wasser abscheidenden, durchlässigen Schichten in sowohl unterhalb dieser beiden Schichten als auch der Filterschicht voneinander getrennt angeordnete Wassersammelräume abströmen zu lassen. Durch diese Maßnahme wird eine überraschend gute, das heißt nahezu vollständige Wasserabscheidung erreicht.

Das vorstehend beschriebene Prinzip gilt für beliebig aufgebaute Filter, sofern diese nur zwei voneinander beabstandete durchlässige Schichten stromauf eines Filterelementes besitzen.

Besonders vorteilhaft lässt sich das erfindungsgemäße Prinzip bei einem Kraftstofffilter mit einem radial durchströmten Ringfilterelement verwirklichen. In diesem Fall sind die beiden durchlässigen Schichten konzentrisch außerhalb des Ringfilterelementes angebracht. Während die beiden durchlässigen Schichten voneinander radial beabstandet sein müssen, um hierdurch den zur Wasserabscheidung erforderlichen Freiraum zu bilden, kann die dem Ringfilterelement benachbarte, durchlässige Schicht direkt auf dem Außenumfang des Ringfilterelementes angeordnet sein. Diese durchlässige Schicht kann insbesondere in das Ringfilterelement radial außen integriert sein oder sogar von dem Filtermaterial des Ringfilterelementes selbst gebildet sein.

Die beiden voneinander getrennten Wassersammelräume liegen jeweils wannenförmig bei einem solchen Ringfilterelement unterhalb des Ringfilterelementes, wobei die erste Wannen als Bodenwanne innerhalb der zweiten Wanne als ebenfalls Bodenwanne liegt. Der innerhalb der ersten Bodenwanne liegende Wassersammelraum besitzt nach oben eine Begrenzungswand, die gebildet wird einerseits von einer angrenzenden, geschlossenen Stirnwand des Ringfilterelementes sowie von einem ringförmigen; sich hieran nach radial außen anschließenden Verschlussboden des zwischen den beiden durchlässigen Schichten liegenden Freiraumes. Dieser ringförmige Verschlussboden enthält Verbindungsöffnungen zwischen dem Inneren des ersten Wassersammelraumes und dem Freiraum zwischen den beiden durchlässigen Schichten. Die Anzahl und Größe der auf dem Ringumfang anzubringenden Öffnungen kann insbesondere experimentell optimiert werden.

Der zweite Wassersammelraum, der den ersten Wassersammelraum umschließt, liegt in einer unteren Bodenwanne, die radial außen mit dem Anströmraum der radial außenliegenden, durchlässigen Schicht verbunden ist, um dort abgeschiedenes Wasser aufnehmen zu können. Die Aufnahme dieses abgeschiedenen Wassers geschieht dadurch, dass das Wasser schwerkraftbedingt nach unten abströmt. In der gleichen Form gelangt das in dem Freiraum zwischen den beiden durchlässigen Schichten anfallende, abgeschiedene Wasser in den ersten Wassersammelraum.

Bei der Ausführung des erfindungsgemäßen Filters als ein Ringfilterelement führt aus dem Boden des ersten Sammelraumes ein verschließbarer Kanal durch den zweiten Sammelraum hindurch nach außen, um abgeschiedenes Wasser nach außerhalb des Filters abführen zu können.

Ein vorteilhaftes, nachstehend näher erläutertes Ausführungsbeispiel ist in der Zeichnung darstellt.

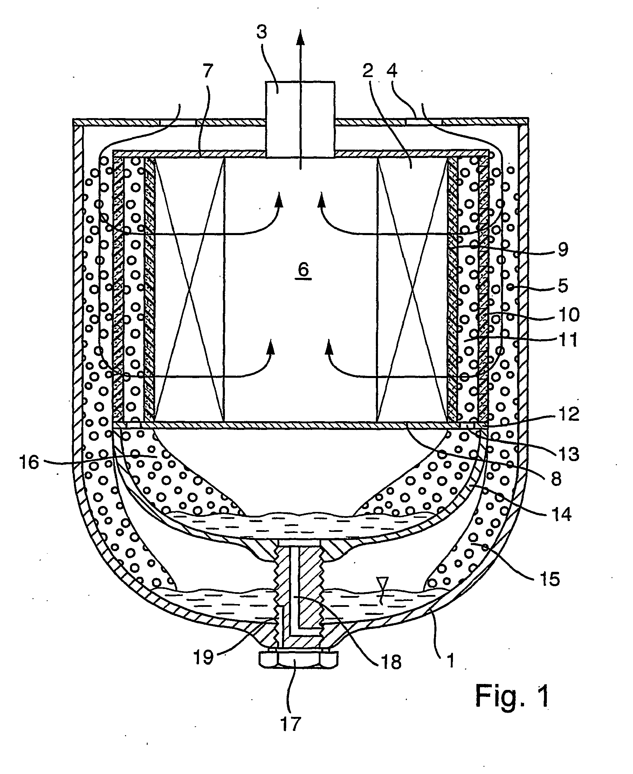

In dieser zeigt die einzige
- Fig. 1: einen Längsschnitt durch ein Kraftstofffilter mit einem Ringfilterelement in schematischer Darstellungsform.

Innerhalb eines äußeren Filtergehäuses 1 ist ein Ringfilterelement 2 gelagert.

Dieses Ringfilterelement 2 wird von radial außen nach innen von einem zu filternden Kraftstoff durchströmt, der das Kraftstofffilter durch einen nach außen führenden Rohrstutzen 3 verlassen kann. In das Filtergehäuse 1 eingeführt wird der zu reinigende Kraftstoff durch an einer Stirnseite des Gehäuses 1 über deren Umfang verteilt angeordnete Einlassöffnungen 4. Die Durchströmung des Kraftstofffilters durch Kraftstoff ist mit Strömungspfeilen angedeutet. Der Raum, in den der zu reinigende Kraftstoff durch die Einlassöffnung 4 eintritt, ist der Rohraum 5 des Filters. Mit dem Rohrstutzen 3 ist der Reinraum 6 des Ringfilterelementes 2 strömungsleitend verbunden. Außer dem Rohrstutzen 3, durch den Kraftstoff abfließen kann, sind die Stirnseiten 7 und 8 des Ringfilterelementes 2 geschlossen, das heißt undurchströmbar ausgeführt. Die Stirnseite 7 ist dem Rohrstutzen 3 zugeordnet, während die Stirnseite 8 an der gegenüberliegenden Seite liegt.

Radial außen sind dem Ringfilterelement 2 zwei gegeneinander radial beabstandete Ring-Schichten 9, 10 stromaufseitig vorgelagert. Dabei liegt die durchlässige Schicht 9 direkt an dem Außenumfang des Ringfilterelementes 2 an, während die Ring-Schicht 10 sich radial weiter außen befindet. Zwischen den beiden Ring-Schichten 9, 10 wird von diesen Schichten 9, 10 ein Ringraum als Freiraum 11 eingeschlossen. Die geschlossene Stirnseite 8 des Filterelementes erstreckt sich über den Außenumfang des Ringfilterelementes 2 nach radial außen und deckt dabei den ringförmigen Freiraum 11 an der zugehörigen Stirnseite ab. Hierdurch entsteht ein ringförmiger Verschlussboden 12. In diesem Verschlussboden 12 sind diesen axial durchdringende Öffnungen 13 umfangsmäßig verteilt vorgesehen. An dem dem Verschlussboden axial entgegengesetzten Stirnende des Ringfilterelementes 2 verschließt dessen Stirnseite 7 den dort angrenzenden Freiraum 11.

Mit dem radialen Außenbereich der Stirnseite 8 dicht verbunden ist der offene Rand einer Bodenwanne 14. Zwischen dieser Bodenwanne 14 und dem zugewandten stirnseitigen Ende des Kraftstofffilters befindet sich ein Wassersammelraum, der hiermit als zweiter Wassersammelraum definiert wird. Dieser zweite Wassersammelraum 15 steht in radial außen axial offener Verbindung zu dem Rohraum 5 des Filters.

Die Bodenwanne 14 schließt zwischen sich und der Stirnseite 8 des Filterelementes einen ersten Wassersammelraum 16 ein, der über die Öffnungen 13 in den ringförmigen Verschlussboden strömungsmäßig mit dem Freiraum 11 in Verbindung steht.

In dem unteren Bereich des Gehäuses 1 des Kraftstofffilters, der axial dem Rohrstutzen 3 gegenüberliegt, ist eine Ablassschraube eingedreht. Das freie Ende dieser Ablassschraube 17 ist in den Bodenbereich der Bodenwanne 14 den ersten Wassersammelraum 16 nach außen verschließend eingedreht. In der Ablassschraube 17 sind getrennte Ablasskanäle 18 und 19 vorgesehen, durch die nach einem Lösen der Schraube das in den Wassersammelräumen 15, 16 gesammelte Wasser abfließen kann. Auf den Ablasskanal 18 kann im Prinzip verzichtet werden. Ohne einen solchen Ablasskanal 18 muss die Ablassschraube 17 lediglich vollständig aus der Öffnung in den Verschlussboden 12 herausgedreht werden. Das in dem ersten Wassersammelraum 16 vorhandene Wasser fließt dann über den zweiten Wassersammelraum 15 durch den Kanal 19 über die Ablassschraube 17 nach außen ab.

Wird das erfindungsgemäße Filter von wasserhaltigem Kraftstoff durchströmt, so scheidet sich jeweils an der radial nach außen weisenden Oberfläche der beiden durchlässigen Schichten 9 und 10 Wasser in Form von Tröpfchen ab, die jeweils in den zugehörigen Wassersammelraum 15, 16 abfließen können.

Für ein Entleeren der Wassersammelräume 15 und 16 ist lediglich die Ablassschraube 17 zu öffnen.

Die durchlässigen Schichten 9, 10 können aus verschiedenartigsten Materialien bestehen. Besonders geeignet sind selbstverständlich solche, an sich bekannten Materialien, die eine Wasserabscheidung an ihrer Anströmfläche positiv beeinflussen. Insbesondere können jeweils hydrophob wirkende Materialien eingesetzt werden. Dabei können die durchlässigen Schichten 9, 10 aus Vlies bestehen. Insbesondere können diese Schichten aus sogenannten Meltblown-Material bestehen.

Für beide Schichten 9, 10 kann unterschiedliches Material eingesetzt werden. Die Materialauswahl kann unter anderem mit dem Ziel erfolgen, an der Anströmfläche der radial äußeren Schicht 10 größere Wassertröpfchen abzuscheiden als an der radial inneren Schicht 9. Derartig unterschiedlich große Tröpfchen sind in der Zeichnung mit Bezug auf die vorgenannten durchlässigen Schichten 9, 10 eingetragen.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Kraftstofffilter mit einer von dem Kraftstoff zu durchströmenden Filterschicht, bei dem
- Wasser abscheidende, durchlässige Schichten (9, 10) in Strömungsrichtung beabstandet voneinander stromauf der Filterschicht angeordnet sind,
- jeweils bei Betrieb des Filters
- der zwischen den beiden Schichten (9, 10) liegende Freiraum (11) mit einem in dem Filter unten liegenden, ersten Wassersammelraum (16) verbunden ist,
- der erste Wassersammelraum (16) unterhalb sowohl der Filterschicht als auch der beiden durchlässigen Schichten (9, 10) liegt,
**gekennzeichnet durch** die Merkmale,
- der stromauf der, von den beiden Schichten (9, 10) zuerst durchströmten Schicht (10) liegende Filterrohraum (5) ist mit einem zweiten Wassersammelraum (15) innerhalb des Filters verbunden,
- beide Wassersammelräume (15, 16) liegen unterhalb sowohl der Filterschicht als auch der beiden durchlässigen Schichten (9, 10),
- die durchlässigen Schichten (9, 10) sind stromauf wasserabscheidend ausgebildet.

2. Kraftstofffilter nach Anspruch 1,
**dadurch gekennzeichnet,**
**dass** die Filterschicht in der Form eines Ringfilterelementes (2) ausgebildet ist.

3. Kraftstofffilter nach Anspruch 2,
**dadurch gekennzeichnet,**
**dass** die durchlässigen Schichten (9, 10) als dem Ringfilterelement (2) stromauf vorgelagerte Ringschichten ausgebildet sind.

4. Kraftstofffilter nach einem der vorhergehenden Ansprüche,
**dadurch gekennzeichnet,**
**dass** die durchlässigen Schichten (9, 10) aus gleichem Material bestehen.

5. Kraftstofffilter nach einem der vorhergehenden Ansprüche,
**dadurch gekennzeichnet,**
**dass** die durchlässigen Schichten (9, 10) gleiche Dicke besitzen.

6. Kraftstofffilter nach einem der vorhergehenden Ansprüche,
**dadurch gekennzeichnet,**
**dass** die Dicke der durchlässigen Schichten (9, 10) jeweils zwischen 2 und 6 mm beträgt.

7. Kraftstofffilter nach Anspruch 6,
**dadurch gekennzeichnet,**
**dass** die Dicke der durchlässigen Schichten (9, 10) jeweils 4 mm beträgt.

8. Kraftstofffilter nach einem der Ansprüche 2 bis 7,
**dadurch gekennzeichnet,**
**dass** die an das Ringfilterelement (2) stromauf angrenzende durchlässige Schicht (9) in die Ringfilterelementeaußenumfangsfläche integriert bzw. von dieser gebildet ist.

9. Kraftstofffilter nach einem der Ansprüche 2 bis 8,
**dadurch gekennzeichnet,**
**dass** der erste Wassersammelraum (16) begrenzt ist von
- einer geschlossenen Stirnseite (8) des Ringfilterelementes (2),
- einem die geschlossene Stirnseite (8) umschließenden, ringförmigen Verschlussboden (12) des Freiraums (11) zwischen den beiden Schichten (9, 10), wobei dieser ringförmige Verschlussboden (12) Verbindungsöffnungen zwischen dem Freiraum (11) und dem ersten Wassersammelraum (16) besitzt,
- einer ersten Bodenwanne (14) mit an den radialen Außenbereichen des ringförmigen Verschlussbodens (12) dicht anliegenden Wannenrändern.

10. Kraftstofffilter nach einem der Ansprüche 2 bis 9,
**dadurch gekennzeichnet,**
**dass** der zweite Wassersammelraum (15) begrenzt ist von einer die erste Bodenwanne (14) mit Abstand einschließenden zweiten Bodenwanne mit einer radial außenliegenden Verbindung zu dem Anström-Rohraum (5) der radial außenliegenden, durchlässigen Schicht (10).

11. Kraftstofffilter nach Anspruch 10,
**dadurch gekennzeichnet,**
**dass** die zweite Bodenwanne von dem Filtergehäuse (1) gebildet wird.

12. Kraftstofffilter nach Anspruch 10 oder 11,
**dadurch gekennzeichnet,**
**dass** die erste Bodenwanne (14) einen durch die zweite Bodenwanne hindurchführenden, verschließbaren Abflusskanal (18) besitzt.

## Claims

1. A fuel filter with a filter layer through which the fuel is to flow, wherein
- water-separating, permeable layers (9, 10) are disposed spaced apart from one another in the flow direction upstream of the filter layer,
- each time during operation of the filter
- the free space (11) lying between the two layers (9, 10) is connected to a first water collecting space (16) lying beneath the filter,
- the first water collecting space (16) lies below both of the filter layer and the two permeable layers (9, 10),
**characterised by** the features,
- the filter untreated space (5) lying upstream of the layer (10) that is flowed through first of the two layers (9, 10) is connected to a second water collecting space (15) inside the filter,
- both water collecting spaces (15, 16) lie beneath both the filter layer and the two permeable layers (9, 10),
- the permeable layers (9, 10) are designed water-separating upstream.

2. The fuel filter according to claim 1,
**characterised in that**
the filter layer is embodied in the form of an annular filter element (2).

3. The fuel filter according to claim 2,
**characterised in that**
the permeable layers (9, 10) are embodied as annular layers located upstream in front of the annular filter element (2).

4. The fuel filter according to any one of the preceding claims,
**characterised in that**
the permeable layers (9, 10) are made from the same material.

5. The fuel filter according to any one of the preceding claims,
**characterised in that**
the permeable layers (9, 10) have the same thickness.

6. The fuel filter according to any one of the preceding claims,
**characterised in that**
the thickness of the permeable layers (9, 10) amounts in each case to between 2 and 6 mm.

7. The fuel filter according to claim 6,
**characterised in that**
the thickness of the permeable layers (9, 10) amounts in each case to 4 mm.

8. The fuel filter according to any one of claims 2 to 7,
**characterised in that**
the permeable layer (9) lying upstream adjacent to the annular filter element (2) is integrated into the external peripheral surface of the annular filter element or is embodied by the latter.

9. The fuel filter according to any one of claims 2 to 8,
**characterised in that**
the first water collecting space (16) is bounded by
- a closed end face (8) of the annular filter element (2),
- an annular closure bottom (12) of the free space (11) between the two layers (9, 10), said closure bottom surrounding the closed end face (8), wherein this annular closure bottom (12) has connection openings between the free space (11) and the first water collecting space (16),
- a first bottom tank (14) with tank edges lying tightly adjacent to the radial outer regions of the annular closure bottom (12).

10. The fuel filter according to any one of claims 2 to 9,
**characterised in that**
the second water collecting space (15) is bounded by a second bottom tank with a radially outer connection to the in-flow untreated space (5) of the radially outer permeable layer (10), said second bottom tank surrounding the first bottom tank (14) at a distance.

11. The fuel filter according to claim 10,
**characterised in that**
the second bottom tank is constituted by the filter housing (1).

12. The fuel filter according to claim 10 or 11,
**characterised in that**
the first bottom tank (14) has a closable drainage channel (18) passing through the second bottom tank.

## Revendications

1. Filtre à carburant comportant une couche filtrante devant être traversée par le carburant, dans lequel
- des couches perméables (9, 10) séparatrices d'eau sont disposées à distance l'une de l'autre dans la direction d'écoulement, en amont de la couche filtrante,
- à chaque fois que le filtre fonctionne,
- l'espace libre (11) situé entre les deux couches (9, 10) est relié à un premier espace de récupération d'eau (16) situé en bas dans le filtre,
- le premier espace de récupération d'eau (16) se situe en dessous aussi bien de la couche filtrante que des deux couches perméables (9, 10),
**caractérisé par** les particularités suivantes
- l'espace tubulaire de filtre (5) situé en amont de la première couche (10) traversée des deux couches (9, 10) est relié à un second espace de récupération d'eau (15) à l'intérieur du filtre,
- les deux espaces de récupération d'eau (15, 16) sont situés en dessous aussi bien de la couche filtrante que des deux couches perméables (9, 10),
- les couches perméables (9, 10) sont réalisées de façon à séparer l'eau en amont.

2. Filtre à carburant selon la revendication 1,
**caractérisé en ce**
**que** la couche filtrante est réalisée sous la forme d'un élément filtrant annulaire (2).

3. Filtre à carburant selon la revendication 2,
**caractérisé en ce**
**que** les couches perméables (9, 10) sont réalisées sous forme de couches annulaires placées en amont de l'élément filtrant annulaire (2).

4. Filtre à carburant selon l'une des revendications précédentes,
**caractérisé en ce**
**que** les couches perméables (9, 10) sont constituées du même matériau.

5. Filtre à carburant selon l'une des revendications précédentes,
**caractérisé en ce**
**que** les couches perméables (9, 10) possèdent la même épaisseur.

6. Filtre à carburant selon l'une des revendications précédentes,
**caractérisé en ce**
**que** l'épaisseur des couches perméables (9, 10) est comprise chacune entre 2 et 6 mm.

7. Filtre à carburant selon la revendication 6,
**caractérisé en ce**
**que** l'épaisseur des couches perméables (9, 10) s'élève chacune à 4 mm.

8. Filtre à carburant selon l'une des revendications 2 à 7,
**caractérisé en ce**
**que** la couche perméable (9) limitrophe en amont de l'élément filtrant annulaire (2) est intégrée dans la surface périphérique de l'élément filtrant annulaire ou est formée par celle-ci.

9. Filtre à carburant selon l'une des revendications 2 à 8,
**caractérisé en ce**
**que** le premier espace de récupération d'eau (16) est délimité par
- un côté frontal fermé (8) de l'élément filtrant annulaire (2),
- un fond de fermeture annulaire (12) de l'espace libre (11) situé entre les deux couches (9, 10) qui entoure le côté frontal fermé (8), ce fond de fermeture annulaire (12) possédant des ouvertures de liaison entre l'espace libre (11) et le premier espace de récupération d'eau (16),
- une première cuvette de fond (14) comportant des bords de cuvette accolés de manière étanche aux zones extérieures radiales du fond de fermeture annulaire (12).

10. Filtre à carburant selon l'une des revendications 2 à 9,
**caractérisé en ce**
**que** le second espace de récupération d'eau (15) est délimité par une seconde cuvette de fond, incluant à distance la première cuvette de fond (14), qui comporte une liaison radialement extérieure avec l'espace tubulaire d'entrée (5) de la couche perméable (10) radialement extérieure.

11. Filtre à carburant selon la revendication 10,
**caractérisé en ce**
**que** la seconde cuvette de fond est formée par le carter de filtre (1).

12. Filtre à carburant selon la revendication 10 ou 11,
**caractérisé en ce**
**que** la première cuvette de fond (14) possède un canal d'évacuation (18) pouvant être fermé, qui traverse la seconde cuvette de fond.
